# EUROPEAN PATENT APPLICATION

(11) **EP 0 550 027 A1**
(43) Date of publication of application: **07.07.1993**
(21) Application number: 92121968.9
(22) Date of filing: 24.12.1992
(51) Int. Cl.: A21C 11/10, A21C 11/02, B26F 1/38

(54) **Production of pellets**

(30) Priority: 27.12.1991 IT TV910133
(71) Applicant: FEN NEW FOOD ENGINEERING S.P.A., I-31015 Conegliano (TV) (IT)
(72) Inventor: Righetto, Giordano, I-30035 Mirano (VE) (IT)
(74) Representative: D'Agostini, Giovanni, Dr.

(57) **Abstract**

Improved method for obtaining pellets multiform (1), particularly on the assembly lines for the production of snacks, of the type at the head of a production line, the realization of a semi-finished compound, consisting in humidified mixtures of cereals and/or other starchy ingredients of various nature obtained by extrusion and shaping having an initial configuration of a flat and even paste (2), and providing an intermediate station, for a shaping cycle of the pellets, with at least a third lower station of desiccation and/or expansion of the same, in that said shaping cycle, consists in carrying the edible paste (2) along a transport line (3), to two phases of moulding in logical sequence and including relative recovery units of the scrap materials so obtained which are deferred to the upper aforesaid station or sent directly to the successive one.

## Description

This invention has as object an improved method for obtaining pellets multiform, particularly on the production lines for the production of snacks. The innovation finds particular even if not exclusive application in the machine sector of the food industry.

At the present art, the production lines in particular are well- known in the production of snacks. In common terminology, the snack is finished food product to be consumed as is, prevalently as afternoon break food. It may be the type obtained from the pellet of cereals or tubers expanded for frying, or from blown products expanded directly, such as salt biscuits and so on. In the first case, in an automatized line, the realization of a semi-finished storable compound, as the pellet, snack pellet, or also half product, obtained by extrusion and moulding of humidified mixtures of cereals and/or other starchy ingredients of various nature is foreseen. The initial configuration of such a mixture is essentially even and flat, basically an edible paste, which will eventually be subjected to a drying process until optimal temperature and humidity conditions are attained. Once the edible paste obtains this consistency it is then moulded to form the desired pellet,to eventually reach the final process of desiccation and/or of expansion obtaining the said snack.

With regards to the realization phase of the forms with more or less even geometric outlines, originating from a flat and uniform edible paste, there exist different more or less well- known procededures, the most common being that which is utilized in the cookie and biscuit making process. In particular an apparatus is provided which by means of an expedient moulding roller extracts, for pressing, the desired cookie forms from a thick piece of paste, in turn prepared with the suitable apparatuses. The translation of said system in the production sector of "snacks" has, due to market demand, also allowed the shaping of the flat pellets from which, because of their ability to expand in an enivronment of high temperature, one obtains the manufactured potatoe chips derived from a mixture of flour based ingredients. In this case one also begins from an edible paste of uniform thickness, and by means of pressing by the same moulding roller, one obtains flat pellets with various shapes such as: round, oval, triangular, quadrilateral and so on. Noticeable drawbacks in the aforesaid solution lie essentially in the fact that the combinations of forms which are obtainable are somewhat limited since every apparatus would require the use of different print matrixes in order to continuously obtain innovative forms. Consequently this involves particularly high costs as does its realization and the store management of the moulding rollers. Ufortunately, this is a disadvantage which cannot be overlooked mainly due to the fact that the user is constantly in search of innovative forms which will allow him to stimulate the purchasing power of his own product rather than that of another. A further disadvantage that may be found in the aforesaid solution consists of the fact that the shapes are often somewhat inaccurate, mainly with reference to the accuracy of the reproduction of the shape on the paste from the form represented by the matrix.

Likewise, another cutting method is known for obtaining flat pellets with cutout shapes on the interior of an exterior outline, always beginning from a paste, which necessitates the use of two alternate punching-presses placed in series, wherein the first extracts the internal shapes from the paste, while the second makes the exterior outline. Both cut the product exempt of a lower uniform surface , allowing the scrap material to fall in the area immediately below It is therefore possible to obtain a qualitatively better product than ever before but that, however ,is always less utilized because of the high costs involved for its realization, above all for blanking-punches and the counterproof, and because the operation remains as time consuming as before.

The present invention aims to remedy the above-mentioned drawbacks.

This and other goals are reached with the present invention in compliance with the characteristics of the enclosed claims resolving the problems mentioned by way of an improved method for obtaining pellets multiform, particularly on the production lines for the production of snacks, including the type involved in the chain of a production line, the preparation of a semi-finished compound consisting in humidified cereal mixtures and/or other starchy ingredients of a various nature obtained by extrusion having been moulded in its initial configuration into an essentially flat and even paste, and providing an intermediate station for the shaping cycle of the pellets, and finally with at least one vale of desiccation and/or expansion of these same pellets, called the shaping cycle which consists of carrying the edible paste along a transport line with two moulding phases in logical sequence by way of distinct and successive synchronized means and including related recovery units of the scrap materials created which are reintroduced at the top of the aforesaid station or sent directly to the successive one.

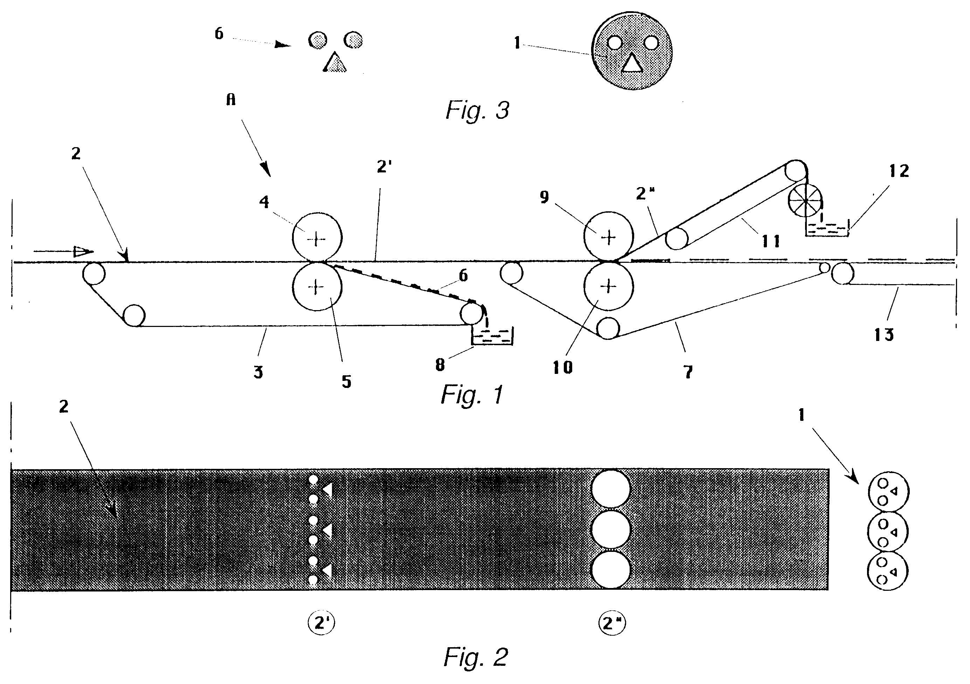

In this manner by way of the said important creative contribution whose effect constitutes immediate technical progress different advantages are achieved, first of all we will note that is possible to obtain pellets with an almost infinite number of aesthetic solutions, ranging from the more complex forms to the simpler ones, without altering the normal productive process mainly during the execution periods, and also obtaining a product with qualitative characteristics that are superior to the norm at competitive prices. These and other advantages will appear in the following detailed description of the preferential solutions of realization with the help of the schematic drawings included whose execution details are not to be considered limitative but only illustrative. Figure 1 represents a side view of an apparatus used for the shaping of flat pellets in a production line for the production of snacks. Figure 2 represents an overhead view of the processed conditions of a piece of edible paste. Figure 3 represents an overhead view of the products obtained in the different phases.

By also referring to the figures we note that pellets, snack pellets, or also half products, multiform (1), particularly for obtaining snacks with complex forms, are obtained through the use of an apparatus (A) provided in the case of a production line wherein one obtains respectively ,in the upper area, a semi-finished compound as well as an edible paste (2)and in the area below of the aforesaid apparatus (A)disposal of at least one desiccation and/or expansion station of pellets (1) formed as such. The process uses a preformed paste sheet (2), obtained from a mixture of starchy ingredients, such as cereals and/or tubers and/or vegetables, to which in turn can be added spices, vegetable flavourings, savoury flavourings, food dyes, preservatives, nutritional integrators,technological adjuvants. The semifinished paste found at the top of apparatus (A) that can be monolayer or multi-layer, can have a degree of gelatinization of its starches varying from 0 to 100%, a relative humidity between 16% and 50%, a variable thickness between . 0,2 mm. and 3 mm. with a width of up to 2 m. The flat and even paste (2) is placed on a conveyor belt (3) of the type obtained with elasticized material, and together with this passes through an initial moulding section (a'). Said section is esentially composed of a couple of rollers (4, 5) respectively, the first (4) acting as moulding roller which obtains the external proturbances during the incision of the paste sheet and in particular obtains figures (6), that will constitute the internal cutout parts of the finished product, and a counter roller (5) of the flat type coated in a plastic material which is harder than that of the conveyor belt(3) but equally pliable. From this initial moulding phase the conveyor belt exits from one side (3), which transports the figures (6) cut out from the paste sheet(2)while the paste sheet exits from the other side in its processed state (2') which proceeding to a second moulding section (a'') is deposited on a second conveyor belt (7). The cutouts (6), in the form of main products from moulding section (a'), can be sent automatically to the successive desiccation and/or expansion phases necessitated by the manufacturing process, otherwise they can be returned, by means if a recovery unit(8), located at the upper station of apparatus (A) of realization of the paste sheet (2) to be recycled. The paste sheet in its processed form (2'), along with the conveyor belt (7) pass successively through the second moulding section (a'') which corresponds with every group of cut out figures (2'),to the incision of the exterior outline thereby obtaining the finished product (1). Also in this case moulding section (a''), in the upper area, has a moulding roller (9) on which are imprinted the matrixes that extract the external outlines, and a counter roller (10)identical to the previous one (5) situated below the transport level of the conveyor belt (7). From moulding section (a'') exit, from one side supported by the conveyor belt (7), the pellets with a complex form (1) in their definitive configuration which will move onwards by means of the conveyor belt (13)towards the successive stations for the desiccation and/or expansion process, while from the other side exits the processed paste sheet (2'') which constitutes a scrap material, which by means of the conveyor belt (11) is sent to a recovery unit(12) to be automatically returned to the upper recycling area of apparatus (A). In order to achieve synchronicity in the different phases of the process,it is necessary that the ratio between the rotation speed of the two pressing groups (a', a'')remains constant, by the same token the ratio between the speed of the conveyor belts (3, 7) which carry out the translation of the paste sheet across the two pressing groups (a', a'') and that of the conveyor belt which collects the scrap materials (11) must also be constant: Furthermore, to reach synchronized conditions between the different phases of the process to the varying of the characteristics of the different shapes that must be produced, it is opportune that the speeds can be constantly varied, and in particular that the rotation speed of the rolls in the pressing sections (a', a'')can be varied independently from those of the conveyor belts (3, 7 and 11). The variation of the speed of the print rollers with respect to the corresponding conveyor belt , is determined in order to achieve the tearinh of the pressed parts. A condition that also allows the deformation of the part concerned with regards to the press matrix ( whether negative or positive ) extracted on the moulding roller , as for example an ovalization. Finally, the operative phase of the two pressing groups (a', a'') can be obtained by varying the wheel-base between the first and the second group, or by varying the length of the course that the processed paste sheet (2') must complete in order to go from the first (a') to the second section (a'') of pressing.

In an ulterior preferential solution, but without wherewith substantially modifying the process described above, the two distinct moulding sections (a', a'') can be made up of moulding means different from the moulding rollers (4, 9) and their respective counterrollers (5, 10). Particularly in the upper part movable perpendicular means are foreseeable with regards to the conveyor belt of the paste sheet(2, 2' and 2'') which jointly compresses the related belt(3, 7), being stopped in logical sequence on an opposing flat and pliable surface. The attainable advantages in this last case consist of a qualitative improvement of the definitive configuration, avoiding deformations and eventual slaverings.

## Claims

1. IMPROVED METHOD FOR OBTAINING PELLETS MULTIFORM ON THE PRODUCTION LINES FOR THE PRODUCTION OF SNACKS, of the type including and headed by a production line, the realization of a semi-finished compound, consisting in humidified mixtures of cereals and/or other starchy ingredients of various nature obtained by extrusion and having an initial configuration of an essentially flat and uniform paste, and providing an intermediate station, for a shaping cycle of pellets, with at least one lower station of desiccation and/or expansion of the same, in that said shaping cycle, characterized by the fact that the said shaping cycle; consists of transporting the edible paste along a conveyor belt, at two phases of moulding in logical sequence by the use of distinct and successive synchronized means, and including relative recovery units of scrap materials so obtained which are returned to the upper area of the aforesaid station or sent directly to the successive one.

2. Method according to claim 1., characterized by the fact that the flat pellets (1) are obtained from an initial roller moulding section (a') that cuts out the internal outlines on the paste sheet of the said pellets (1) to be successively transported (the figures) (6) as such and to a secondary section (a'') that cuts out the external outlines obtaining the pellets (1) in the definitive configuration.

3. Apparatus according to claims 1 and 2,is characterized by the fact that it is composed of:
- conveyor belts (3, 7, and 11) of a semifinished edible paste (2, 2', 2'');
- moulding means (4, 5, 9 and 10) of the said edible paste, having been obtained along the transport line (3, 7, and 11) in two sections (a', a'') that are distinct and successive;
- means (8, 12)for the recovery of scrap materials (6, 2'')created by the processing of the paste in the moulding sections (a', a''), said means including at least one conveyor belt (3, 11) that separates the scrap materials from the configurations so obtained.

4. Apparatus according to the previous claim, characterized by the fact that it includes the means for the automatic deferment of the scrap materials(6, 2'') to an upper recycling station and/or directly to a successive working station.

5. Apparatus according to previous claims, characterized by the fact that the moulding means (4, 5, 9 and 10) are composed for every distinct section (a', a''), of a couple of respective rollers, the first upper rollers (4, 9) being the moulding rollers, which extract the external proturbances of the paste upon incision and beneath these are found the counterrollers (5, 10) of the flat type covered in a plastic pliable material.

6. Apparatus according to claims 1, 2, 3, and 4,characterized by the fact that the moulding means (4, 5, 9 and 10) in the two distinct moulding sections (a', a'')are composed of perpendicularly movable means at the transport level of the paste (2, 2'and 2'') which carry on the extremity at least one print matrix, said means compressing the paste jointly to the relative belt (3, 7), being stopped in logical sequence, on an opposing flat and pliable surface.

7. Method and apparatus according to previous claims, characterized by the fact that the ratio between the rotation speed of the two pressing groups (a', a'') is constant as is the ratio between the speed of the conveyor belts (3, 7) that carry out the translation of the paste sheet across the two print groups (a', a'') and that of the scrap material recovery carpet (11).

8. Method and apparatus according to previous claims, characterized by the fact that the rotation speed of the rolls in the print sections (a', a'')by means of transmission of the adjustable motion, are independently variable from those of the carpets (3, 7 and 11).

9. Method and apparatus according to previous claims, characterized by the fact that the operative phase of the two moulding groups (a', a'') can be obtained by varying the wheelbase between the first and the second group, or by varying the length of the course that the processed paste (2') must complete in order to go from the first to the second.
